Europäisches Patentamt

European Patent Office

Office européen des brevets

Veröffentlichungsnummer: **0 276 403**
**A2**

# EUROPÄISCHE PATENTANMELDUNG

Anmeldenummer: 87117232.6

Anmeldetag: 23.11.87

Int. Cl.4 **H04B 1/38**

Priorität: **28.11.86 DE 8631855 U**
**28.11.86 DE 8631850 U**

Veröffentlichungstag der Anmeldung:
**03.08.88 Patentblatt 88/31**

Benannte Vertragsstaaten:
**AT BE CH DE FR GB IT LI LU NL SE**

Anmelder: **Siemens Aktiengesellschaft Berlin**
**und München**
**Wittelsbacherplatz 2**
**D-8000 München 2(DE)**

Erfinder: **Nothnagel, Gerd, Ing.(grad)**
**Geroltstrasse 36/V**
**D-8000 München 2(DE)**

Telefon, insbesondere Funktelefon.

Bei einem Funktelefon wird die Chip-Karte in ein ggf. klappbar ausgebildetes Fach auf der Rückseite eingeschoben oder eingelegt. Die Kontaktierung erfolgt automatisch nach dem Schließen der Klappe kontaktschonend.

**EP 0 276 403 A2**

FIG 1

## Telefon, insbesondere Funktelefon

Die Erfindung bezieht sich auf ein Telefon, insbesondere Funktelefon, zu dessen Betätigung eine Berechtigungskarte in Form einer sogenannten Chip-Karte notwendig ist, bei dem im Sprechhörgerät selbst, das die Wähleinrichtung enthält, und für Funkzwecke auch mit einer Antenne ausgestattet ist, ein mit einer Klappe verschließbares Fach vorgesehen ist, in das bei geöffneter Klappe die Karte einlegbar ist.

Bei sogenannten Mobiltelefonen, die als direkte Funktelefone ausgebildet sind, ist zur Benutzung eine Chip-oder Magnet-Karte notwendig, die die Berechtigung des Teilnehmers in codierter Form enthält. Derartige Einrichtung sind z. B. durch die Europäische Patentanmeldung 0 121 927 und des Deutschen Gebrauchsmusters G 86 08 392 bekannt.

Der Erfindung liegt die Aufgabe zugrunde, die Unterbringung dieser Berechtigungskarte so zu gestalten, daß sie auch wie ein Handfunksprechgerät vor Beschädigungen geschützt, staubdicht und nicht sichtbar untergebracht wird. Ferner soll verhindert werden, daß bei Einlegen und Entnehmen der Chip-Karte die hauchdünnen vergoldeten Kontakte beschädigt werden.

Erfindungsgemäß wird diese Aufgabe bei einer Einrichtung der eingangs genannten Art dadurch gelöst, daß innerhalb des Faches am Boden Andruckkontakte (6) angeordnet sind, die beim Schließen der Klappe in der Endphase aktiviert werden, und daß im Fach eine Rastvorrichtung für die Klappe enthalten ist, die durch wenigstens eine seitliche Taste entrastbar ist, so daß die Karte nach Öffnen der Klappe griffbereit entnehmbar ist.

Weitere vorteilhafte Ausgestaltungen der Erfindunge finden sich in den Unteransprüchen.

Die Figuren zeigen jeweils ein Funktelefon 1, das mit einer Wähltastatur 2 und einer Antenne 3 ausgestattet ist.

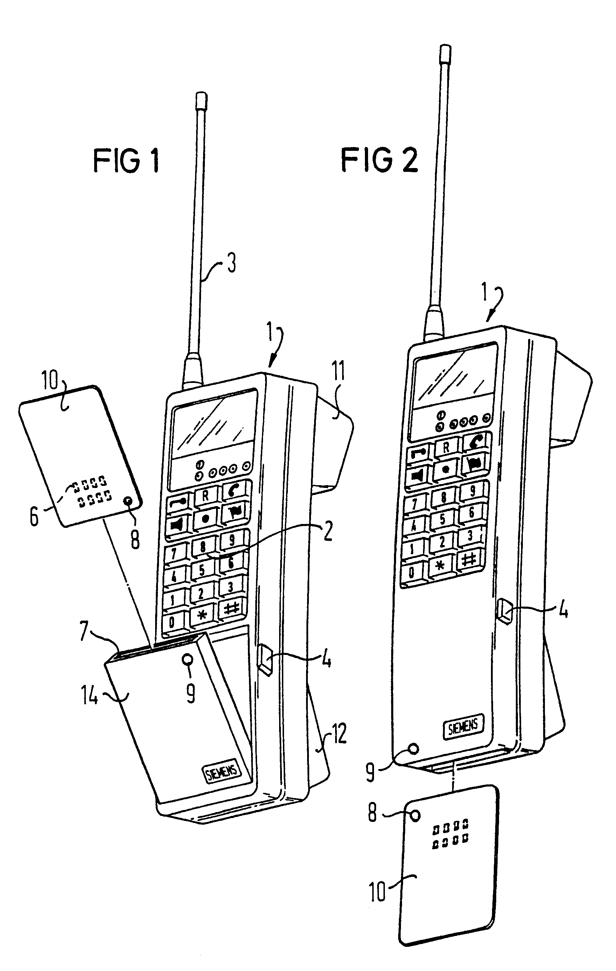

Die Figuren 1 bis 8 zeigen Ausführungbeispiele für die Unterbringung der Berechtigungskarte 10 in einem Handfunksprechgerät 1 mit Antenne 3.

Auf der Oberseite des Mobiltelefons 1 ist unterhalb des Tastenfeldes 2 eine Klappe 14 angeordnet, die durch Druck auf eine seitlich angeordnete Taste 4 ausschwenkbar ist. In dieser Klappe befinden sich federnde Kontakte, die beim Ausschwenken der Klappe zurückfedern.

Nach dem Einschieben der Berechtigungskarte 10 wird die Klappe 14 geschlossen und im letzten Schwenkbereich Kontakt mit den federnden Lese-Kontakten hergestellt. Dabei ist die Karte bereits in ihrer Anschlagstellung. Nun ist die Chipkarte nicht mehr sichtbar und staubdicht gelagert. Es ist auch möglich, die Karte wassergeschützt unterzubringen.

Zum lagerichtigen Einbringen ist auf der Karte eine Markierung 8 angebracht, vorzugsweise in Form einer kleinen Lochung. Eine entsprechende Markierung 9 ist in der Nähe des Einschubschlitzes 7 am Kartenfach angebracht.

Wird die seitliche Taste 4 gedrückt, lösen sich zuerst die Federkontakte von den Chipkartenkontakten 7 und danach wird die Chipkarte 10 automatisch soweit aus dem Schlitz 7 der Klappe ausgeworfen, daß man sie bequem herausziehen kann.

Figur 2 zeigt eine Lösung, bei der die Karte 10 an der Stirnseite des Mobiltelefons eingeschoben wird. Die Kontaktierung erfolgt dabei prinzipiell wie bei Figur 1. Beim Einschieben der Karte werden die bis dahin zurückliegenden Federkontakte im Leser im letzten Bereich geschlossen, und zwar so, daß beim Anschlag der Karte in der Endstellung die Federkontakte automatisch ausgelöst werden. Die Karte ist dabei völlig in das Mobiltelefon eingeschoben. Zum Auswerfen der Karte wird dabei die seitliche Taste 4 gedrückt. Dabei lösen sich zuerst die Federkontakte des Chipkartenlesers, ehe die Karte durch einen Auswerfmechanismus automatisch etwa 1,5 cm herausgeschoben wird.

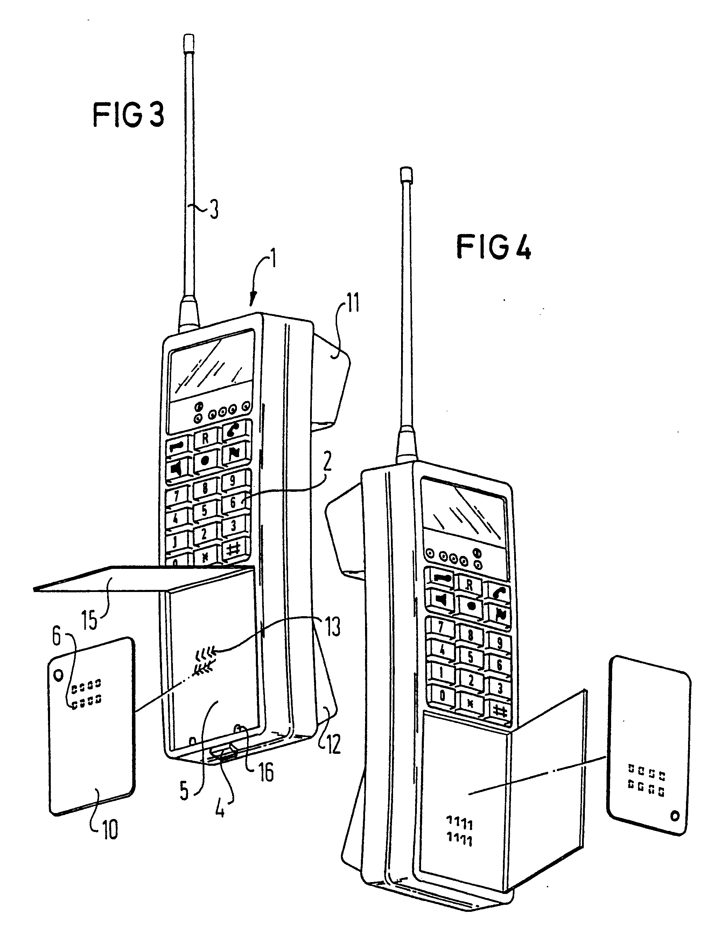

Gemäß Figur 3 wird die Karte 10 in einen entsprechend dimensionierten Raum 5 eingelegt und dabei eine lose Verbindung der Kontakte 6 auf der Chipkarte 10 mit den federnd gelagerten KOntakten 13 des Lesers hergestellt. Die Karte hat dabei bereits die endgültige Lage erreicht. Die geforderte Kontaktkraft von ca. 40 dN wird beim Schließen der schwenkbaren Klappe 15 hergestellt, die in beispielsweise zwei Rastnasen 9 eingreift.

Beim Drücken der Taste 4 wird die schwenkbare Klappe 15 über eine Feder automatisch geöffnet und die Karte kann dann anschließend entnommen werden.

Die Lösung kann auch so realisiert werden, daß die Schwenkklappe 15 nach unten oder nach rechts oder nach links seitlich geöffnet bzw. geschlossen werden kann.

Die Lösungen nach den Figuren 3 und 4 erfordern den geringsten Platzbedarf für den Leser.

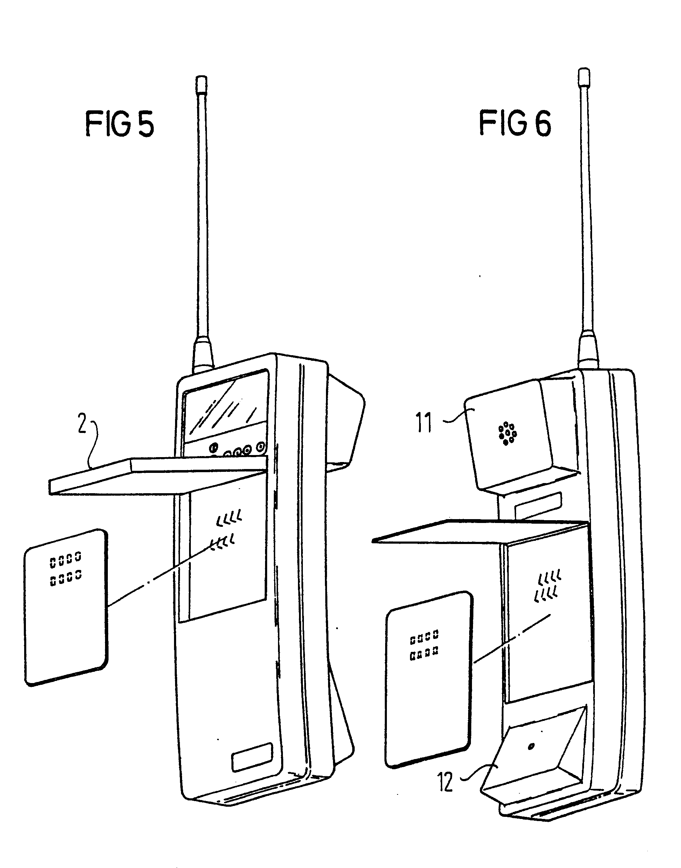

Eine weitere vorteilhafte Lösung besteht im Ausschwenken des gesamten Tastenfeldes 2 und Einlegen der Karte wie in Figur 5 gezeigt. Die Kontaktierung erfolgt dabei wie bei den Figuren 3 und 4.

Figur 6 zeigt die Unterbringung der Berechtigungskarte auf der Unterseite des Mobiltelefons zwischen Sprechmuschel 12 und Hör muschel 11. Anordnung und Kontaktierung und Unterbringung sind dabei wie bei den Figuren 3 und 4 gelöst.

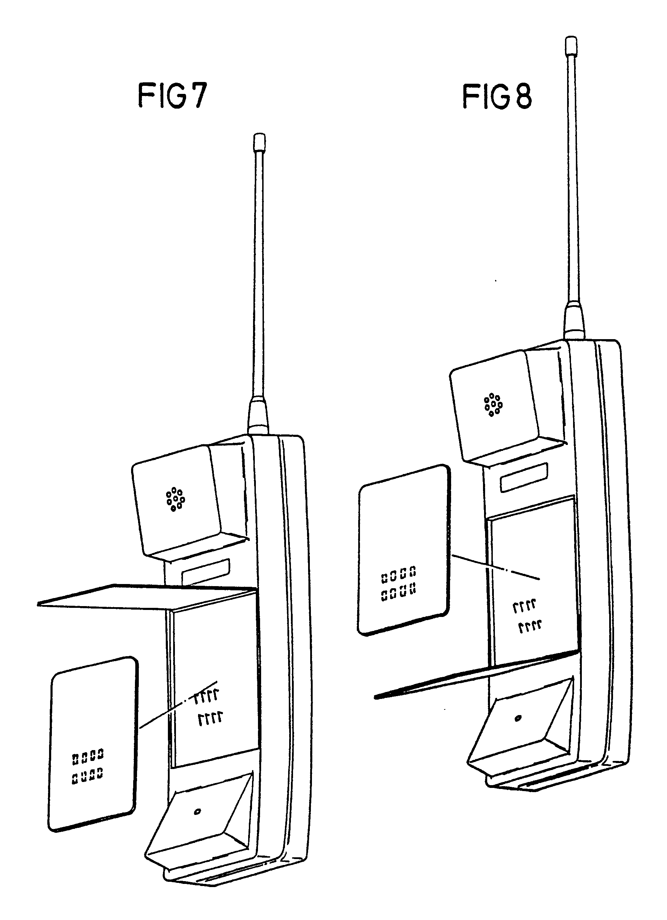

Die schwenkbare Klappe kann dabei oben, unten - gemäß den Figuren 7 und 8 oder rechts oder links angeschlagen sein.

Bezugszeichenliste 1 = Handfunksprechgerät

2 = Tastenfeld
3 = Antenne
4 = Taste
5 = Kartenfach
6 = Chipkartenkontakte
7 = Einwurfschlitz
8 = Markierung auf der Karte
9 = Markierung am Kartenfach
10 = Berechtigungskarte
11 = Hörmuschel
12 = Sprechmuschel
13 = Kontakte im Kartenfach
14 = Klappe mit Kartenfach
15 = Klappe
16 = Rastnasen

## Ansprüche

1. Telefon, insbesondere Funktelefon, zu dessen Betätigung eine Berechtigungskarte in Form einer sogenannten Chip-Karte notwendig ist, bei dem im Sprechhörgerät selbst, das die Wähleinrichtung enthält, und für Funkzwecke auch mit einer Antenne ausgestattet ist, ein mit einer Klappe verschließbares Fach vorgesehen ist, in das bei geöffneter Klappe die Karte einlegbar ist, **dadurch gekennzeichnet,** daß innerhalb des Faches am Boden Andruckkontakte (6) angeordnet sind, die beim Schließen der Klappe in der Endphase aktiviert werden, und daß im Fach eine Rastvorrichtung für die Klappe enthalten ist die durch wenigstens eine seitliche Taste (4) entrastbar ist, so daß die Karte (5) nach Öffnen der Klappe griffbereit entnehmbar ist.

2. Telefon, insbesondere Funktelefon nach Anspruch 1, **dadurch gekennzeichnet,** daß der Karteneinschub selbst als Klappe (3) ausgebildet ist, die die Karte (5) lagerichtig aufnehmen kann und daß die Kontakte zum Lesen der Karteninformation nach dem Eindrücken der Klappe im letzten Schwenkbereich in den Handapparat (1) hervortreten und die Karte abtasten und daß diese Kontakte beim Drücken der seitlichen Taste (4) wieder von der Karte (3) abgehoben werden.

3. Telefon, insbesondere Funktelefon nach Aunspruch 1 oder 2, **dadurch gekennzeichnet,** daß eine Schnappfeder-Rasterung vorgesehen ist, durch die die Karte beim Öffnen durch die Seitentaste (4) griffbereit ausgeschoben wird.

4. Telefon, insbesondere Funktelefon nach einem der vorhergehenden Ansprüche, **dadurch gekennzeichnet,** daß das Scharnier der Klappe (4) seitlich, oben oder unten angeordnet ist.

5. Telefon, insbesondere Funktelefon nach einem der vorhergehenden Ansprüche, **dadurch gekennzeichnet,** daß die Klappe (4) dicht ausgebildet ist.

6. Telefon, insbesondere Funktelefon nach einem der vorhergehenden Ansprüche, **dadurch gekennzeichnet,** daß auf der Klappe die Betätigungskontakte, insbesondere die Wähltastatur (2) angeordnet ist.

7. Telefon, insbesondere Funktelefon, nach einem der vorhergehenden Ansprüche, **dadurch gekennzeichnet,** daß die Klappe zwischen Hörer (11) und Mikrofon (12) auf der Innenseite des Sprechhörgerätes angeordnet ist.

FIG 1   FIG 2

FIG 3

FIG 4

FIG 5

FIG 6

## FIG 7

## FIG 8